# EUROPÄISCHE PATENTSCHRIFT

(11) **EP 2 236 280 B1**
(45) Veröffentlichungstag und Bekanntmachung des Hinweises auf die Patenterteilung: **16.10.2013**
(21) Anmeldenummer: 10000468.8
(22) Anmeldetag: 19.01.2010
(51) Int. Cl.: B32B 15/14

(54) **Flächenbauteil mit dekorativer Sichtfläche**
Area component with decorative visible surface
Composant plat doté d'une surface de couche décorative

(30) Priorität: 28.01.2009 DE 102009006525
(43) Veröffentlichungstag der Anmeldung: 06.10.2010
(73) Patentinhaber: Daimler AG, 70327 Stuttgart (DE)
(72) Erfinder: Breunig, Steffen, 75173 Pforzheim (DE); Büchner, Occa, 70597 Stuttgart (DE)
(74) Vertreter: JENSEN & SON

(56) Entgegenhaltungen:
- US-A- 6 013 351

## Beschreibung

Die Erfindung betrifft ein Flächenbauteil mit dekorativer Sichtfläche, insbesondere für den Einsatz als Verblendungsteil, Furnier oder Konstruktionsbauteil im Interieur von Fahrzeugen oder von Elektro- oder Haushaltsgeräten, welches durch einen schichtweisen Aufbau umfassend eine Trägerstruktur aus Metall oder Kunststoff und darüber angeordneter Schicht aus Kunststofffaservlies gebildet ist.

Dekorative Bauteile oder Zierteile werden bei der Innenausstattung von Fahrzeugen in unterschiedlichster Ausgestaltung und unterschiedlichen Oberflächen gestaltet. Gerade bei Interieur oder Verkleidungsteilen von Kraftfahrzeugen aber auch Haushaltsgeräten zählt zur dekorativen Wirkung nicht alleine der optische Eindruck, sondern auch der haptische Eindruck den die Oberflächenbeschaffenheit vermitteln kann. Häufig werden in Kraftfahrzeugen genarbte Kunststoffe, Lederdekore oder Holzfurniere eingesetzt. Teilweise werden auch mit Textilien bespannte, bzw. kaschierte Oberflächen verwendet. Im Kraftfahrzeug sind neben der gleichartigen Dekorierung großflächiger Bereiche, wie beispielsweise der Türinnenverkleidung, des Fußraums oder des Dachhimmels auch kleine Zierbauteile als gefragt, die als Einfügungen in die größeren Flächen verwendet werden.

Von Interesse sind dabei auch Oberflächen, die metallische bzw. metallähnliches Aussehen und die mit feinen Strukturen durchsetzt sind, wobei sie zugleich nicht die für Metalle typische Haptik aufweisen. Fein strukturierte oder ornamentale metallische Oberflächen sind in der Regel schwierig herzustellen und weisen die metallen typische harte und stumpfe Haptik auf.

Aus der DE 102004 019669 A1 ist ein Zierteil für ein Kraftfahrzeug bekannt mit einem im Wesentlichen aus einzelnen Fasern hergestellten, im Kraftfahrzeug-Innenraum sichtbar angeordneten metallisierten Textilvlies, dessen einzelne Fasern eine metallische Beschichtung aufweisen und bevorzugt über einen Leder-Untergrund und unter einer Lackschicht angeordnet sind. Die Fasern weisen dabei eine metallische Beschichtung mittels Bedampfen mit Metall auf.

Aufgabe der Erfindung ist die Bereitstellung eines kostengünstigen Flächenbauteils, das eine metallisch glänzende Oberfläche mit davon abgehobener metallisch glänzender Feinstruktur aufweist und dabei nicht die Haptik einer kalten, harten und metallsichen Oberfläche besitzt, sondern eine weiche Haptik aufweist.

Die Aufgabe wird erfindungsgemäß gelöst durch ein Flächenbauteil mit dekorativer Sichtfläche, insbesondere als Verblendung, Furnier oder Konstruktionsbauteil im Interieur von Fahrzeugen oder von Elektrogeräten, mit einem Schichtaufbau aus Trägerstruktur aus Metall oder Kunststoff und darüber angeordneter Schicht aus Kunststofffaservlies mit den Merkmalen des Anspruchs 1.

Die Lösung sieht somit vor, dass das Kunststofffaservlies aus lichtreflektierenden und/oder lichtbrechenden Polymerfasern gebildet wird, die zum überwiegenden Teil metallisch beschichtet sind und die Dichte oder Dicke des Kunststofffaservlieses so gewählt sind, dass die darunter angeordnete Trägerstruktur, die eine metallisch glänzende oder metallisch spiegelnde Oberfläche aufweist, optisch durchscheint, und das Vlies auf der Oberfläche der Trägerstruktur raue und erhabene Strukturen ausbildet.

Hierbei ist es von besonderer Bedeutung, dass die Polymerfasern nicht vollständig beschichtet sein müssen. Eine nur teilweise Beschichtung trägt erheblich zur Gestaltungsfreiheit des optischen Eindrucks bei. Es ist jedoch festzuhalten, dass die Metallisierung der Fasern einen wichtigen Beitrag zur Haftfestigkeit von Klebern beitragen kann, mit denen sich das Kunststofffaservlies auf dem metallischen Untergrund aufkleben lässt. Je nach Beschichtungsverfahren ist es möglich, die metallische Beschichtung im Wesentlichen nur einseitig auf das Faservlies, oder auch zweiseitig aufzubringen. Im ersten Fall bleibt die Rückseite des Faservlieses im Wesentlichen unbeschichtet. Dabei wird das Faservlies später, so auf die Trägerstruktur aufgebracht, dass die unbeschichtete Seite zur Trägerstruktur hin, bzw. nach unten, zeigt. Die beiden Seiten können unabhängig voneinander mit einem unterschiedlichen Beschichtungsgrad ausgestattet werden. Wir beispielsweise ein Sputterverfahren zur Metallisierung angewendet, liegt eine deutliche Beschichtungsrichtung vor, so dass sich gezielt erst die eine und gegebenenfalls dann auch die andere Seite beschichten lässt.

Durch die metallische Beschichtung werden die Polymerfasern unabhängig von deren Grundmaterial lichtreflektierend und/oder lichtbrechend. Sie erhalten je nach Dicke, einen metallischen Glanz oder eine spiegelnde Oberfläche.

Bei den Polymerfasern kann es sich um Kunstfasern, wie beispielsweise Polyesterfasern, Polyamidfasern und/oder Polypropylen oder dergleichen handeln. Ebenso sind auch Naturfasern, wie beispielsweise Viskosefaern, Baumwollfasern oder Schurwollfasern geeignet. Die Fasern sind auch in den üblischen Mischfaserzusammensetzungen einsetzbar.

Zur Verdeutlichung der Faseranordnung im Faservlies und der Abdeckung des Trägerbauteils sind erfindungsgemäße Flächenbauteile mit dekorativer Sichtfläche graphisch wiedergegeben. Dabei zeigen:
- Fig. 1: Ein Flächenbauteil mit dekorativer Sichtfläche (1) , mit metallisierten Faserbündeln oder -garnen (2) und freien Oberflächen des Trägerbauteils (3)
- Fig. 2: Ein Flächenbauteil mit dekorativer Sichtfläche (1), mit gewellter Oberfläche
- Fig. 3: ein gewölbtes Flächenbauteil mit dekorativer Sichtfläche (1) , mit metallisierten Faser-bündeln oder -garnen (2) und freien Oberflächen des Trägerbauteils (3)

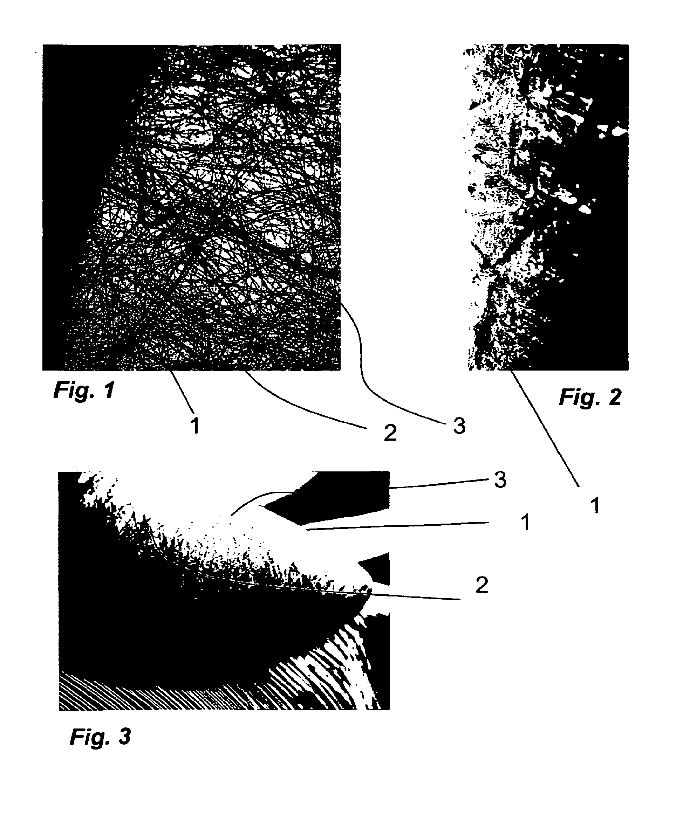

Für den optischen Eindruck der dekorativen Sichtfläche ist es entscheidend, dass die Oberfläche der Trägerstruktur teilweise hindurch scheint, bzw. sichtbar bleibt. Der sich ergebende optische Eindruck wird somit durch die teilweise sichtbare, metallisch glänzende oder spiegelnde Oberfläche der Trägerstruktur und die darüber angeordneten metallisierten Polymerfasern gebildet. Hierzu wird die Dichte oder Dicke des Kunststofffaservlieses so gewählt, dass die darunter angeordnete Trägerstruktur optisch durchscheint. Bevorzugt wird dabei die Dicke des Faservlieses auf wenige Faserbündel bzw. Garnlagen beschränkt und eine lockere Vliesstruktur gewählt. Insbesondere liegt die Dicke des Vlieses bei 2 bis 5 Faserbündel- oder Garnlagen. Der Wert von 2 entspricht beispielsweise den Kreuzungspunkten der Faserstränge (Faserbündel 2) in Fig. 2 .

Bevorzugt decken die Fasern des Kunststofffaservlieses etwa 30 bis 80% der Oberfläche der Trägerstruktur ab. Insbesondere wird eine Abdeckung von 40 bis 75% eingestellt.

Die geringe Dichte und Dicke des Vlieses lassen sich auch mittels eines geringen Flächengewichtes beschreiben. Bevorzugt werden Vliese mit einem Flächengewicht von unter 80g/m2, bevorzugt unter 50 und besonders bevorzugt unter 30g/m2 eingesetzt.

Das Vlies kann sowohl Faseranordnungen in Wirrlage als auch regelmäßige Anordnungen aufweisen.

In einer ersten bevorzugten Ausgestaltung, weist die Vliesstruktur keine regelmäßige Faseranordnung oder Verteilung auf. Dies bedeutet, dass beispielsweise Gewebe mit geometrisch geordneten Faserasträngen bzw. Garnen kaum geeignet sind. Dagegen eignen sich Faseranordnungen in Wirrlage sehr gut. Derartige Anordnungen sind beispielsweise in den Fig. 1 und 3 abgebildet.

Eine weitere bevorzugte Anordnung wird durch Gewebe oder Gestricke gebildet. Diese haben den Vorteil, dass sie einen besseren Zusammenhalt des Vlieses ergeben. Hierdurch lassen sich in einfacher Weise auch gewellte, gewölbte oder geknitterte Vliese als dekorative Sichtfläche einsetzen. Eine derartige Ausgestaltung ist exemplarisch in Fig. 2 abgebildet.

In weiterer bevorzugter Anordnung sind die Gewebe oder Gestricke als regelmäßige geometrische Muster der Fasern-, bzw. -bündel oder -garne ausgebildet.

Es ist darüber hinaus von Bedeutung, dass die Oberfläche des Faservlieses frei liegt. Dies bedeutet insbesondere, dass die dekorative Sichtfläche nicht durch eine Deckschicht oder Folie abgedeckt wird, welche die Oberfläche glättet. Das Tiefenprofil, welches sich durch die teilweise Bedeckung und unterschiedliche Höhe der Bedeckung der Trägerstruktur durch die Fasern ergibt wird bei der erfindungsgemäßen Anordnung im Wesentlichen erhalten. Werden gegebenenfalls Lacke oder Schutzbeschichtungen aufgetragen, sind diese erfindungsgemäß so dünn, dass das Tiefenprofil quasi unverändert erhalten bleibt. Es werden raue und erhabene Strukturen ausgebildet.

Gegenüber den bekannten Anordnungen kann durch die erfindungsgemäße Anordnung ein wesentlich veränderter Gesamteindruck eingestellt und in einfacher Weise variiert werden. Es ist von besonderer Bedeutung, dass die Vliesstruktur durch die darunter angeordnete metallisch glänzende oder spiegelnde Trägerstruktur durch reflektiertes oder gestreutes Licht aufgehellt oder beschienen wird. Eine quasi von unten kommende indirekte Beleuchtung ist für den gewünschten optischen Eindruck unerlässlich. Darüber hinaus ist die metallisch glänzende bis spiegelnde Trägerstruktur geeignet die Fasern-, oder das durch die Fasern reflektierte Licht selbst wieder zu spiegeln. Auch dies ist trägt zum gewünschten optischen Effekt bei.

In der Regel wird die Vliesstruktur flach auf die Trägerstruktur aufgebracht. Eine weitere Variante sieht jedoch vor, das Kunststofffaservlies auf der Oberfläche der Trägerstruktur gewellt oder gekräuselt auf zubringen.
Eine derartige Anordnung ist in Fig. 2 abgebildet. Die Oberfläche weist unter anderem Furchen auf, die sich zur Kante auf der linken Seite hinziehen.

Die Aufbringung der Faservliese kann grundsätzlich durch Kleben oder Thermofixierung erfolgen.

Für die Erfindung ist es wichtig, dass neben den vollbeschichteten auch teilbeschichtete Fasern eingesetzt werden können. In einer bevorzugten Ausgestaltung der Erfindung sind nur 30-80 % der Faseroberfläche des Kunststofffaservlieses metallisch beschichtet. Diese Angabe bezieht sich auf die frei liegenden Oberflächen des Vlieses. Somit sind im Inneren des Garns (Bündels) liegende und verborgene Faserfilamente nicht erfasst. Die Beschichtung der Oberflächen kann dabei lokal bzw. über den Faserstrang, bzw. -garn unterschiedlich stattfinden. Bei einseitig beschichteten Faservliesen ist zu berücksichtigen, dass die unbeschichtete Rückseite bereits in etwa 50% dieser Oberfläche ausmacht.

Besonders bevorzugt sind 50 bis 80% der auf der dekorativen Sichtfläche sichtbar angeordneten Faserbündel- oder Garne, bzw. Fasern metallisch beschichtet. In einer weiteren Variante sind diese quasi vollständig beschichtet. Der Grad der Beschichtung liegt hier bevorzugt bei über 95 % deren sichtbarer Oberflächen.

Es ist zu beachten, dass auch bei den gerichteten Beschichtungsverfahren, wie bspw. das Sputtern, neben der dem Sputtertarget zugewandten Seite auch noch erhebliche Mengen an Beschichtungsmaterial auf den Seiten der Faserbündel oder auch auf der Vliesrückseite abgeschieden werden.

Zu den geeigneten metallischen Beschichtungen zählen Beschichtungen auf der Basis der Metalle Cr, Ni, AI, Au und/oder Ti. Diese Metalle sind auch für die Beschichtung des Kunststoffs des Trägermaterials geeignet. Besonders bevorzugte Beschichtungen sind Gasphasenbeschichtungen, insbesondere Sputterschichten.

In einer weiteren Ausgestaltung sind die metallischen Beschichtungen, bzw. die sie bildenden Metall carburiert oder/oder nitridiert. Dies wird beispielsweise durch eine entsprechende Atmosphäre beim Sputtern erreicht. Bevorzugt werden hierbei TiN, TiC und/oder CrN gebildet. Die Carburierung und/oder Nitridierung kann vollständig oder auch nur zum Teil durchgeführt werden. Je nach Grad der Umsetzung entstehen unterschiedlichste Farbschattierungen. Soweit nicht anders dargestellt werden die hier beschriebenen Beschichtungen ebenfalls als metallische Beschichtungen bezeichnet.

Die Dicke der metallischen Beschichtung ist dabei bevorzugt auf das für den optischen Effekt erforderliche Minimum beschränkt. Das bedeutet, dass die Schichtdicke bevorzugt im Bereich bzw. etwas über der Wellenlänge des sichtbaren Lichtes liegt.

Es ist von besonderer Bedeutung, dass die Oberflächen der Polymerfasern durch die metallischen Beschichtungen eine mikro-Rauhigkeit erhalten. Diese Rauhigkeit bietet einen hervorragenden Haftgrund für Kleber und Beschichtungen. Die Haftfestigkeit von Klebern oder organischen Beschichtungen wird durch die metallische Beschichtung gegenüber den glatten und unbehandelten Polymerfasern deutlich verbessert.

Es ist vorgesehen, dass das mit metallisierten Fasern ausgestattete Kunststofffaservlies auf die Oberfläche der Trägerstruktur aufgeklebt ist. Aufgrund dessen, dass das Faservlies die oberste Materialschicht bildet und somit mechanischer Belastung ausgesetzt ist, kommt der festen Fixierung auf der Trägerstruktur besondere Bedeutung zu. Hier wirkt sich der positive Einfluss der Metallisierung besonders günstig auf die Festigkeit der Klebeverbindung aus. Die Verklebung erfolgt durch eine dünne und transparente Kleberschicht. Für besonders festen Halt ist eine beidseitige Beschichtung des Vlieses zu bevorzugen. Die metallische Beschichtung der Unterseite kann dabei auf die Haltefunktion optimiert und ausgelegt werden, da die optische Funktion auf der Unterseite nahezu Bedeutungslos ist. Dabei ist bspw. auf eine besonders raue Oberfläche der Beschichtung und kostengünstige Metalle abzuheben.

Die Oberfläche der Trägerstruktur kann zu Schutzzwecken oder zur Verbesserung der Haftfestigkeit des Faservlieses eine Lackierung tragen. Bevorzugt ist das Kunststofffaservlies aber unmittelbar auf die Oberfläche der Trägerstruktur mit einer dünnen und transparenten Kleberschicht aufgeklebt. Auf das Flächenbauteil mit dekorativer Sichtfläche kann dann eine abschließende dünne Schutzlackierung aufgetragen sein.

Bei der Trägerstruktur kann es sich um übliche Gebrauchsmetalle handeln. Insbesondere sind hier Legierungen auf der Basis von Mg, AI, Ti, Fe, Cr und/oder Ni von Bedeutung.

Die Trägerstruktur muss dabei eine glatte und zumindest metallisch glänzende Oberfläche aufweisen. Besonders bevorzugt sind Trägerstrukturen aus Leichtmetalllegierungen. Gegebenenfalls kann die Oberfläche des Träger-Metalls aber auch zusätzlich mit einer Metallbeschichtung versehen sein. Diese Beschichtung ist insbesondere als verspiegelnde Aluminierung oder Chromatierung ausgebildet.

Eine weitere Variante der Trägerstrukturen wird durch Kunststoff gebildet. Hierbei sind die üblichen Gebrauchskunststoffe geeignet. Die Kunststoffoberfläche ist zumindest zur dekorativen Sichtfläche hin metallisiert. Sie trägt eine metallische Beschichtung mit metallischem Glanz. Als Beschichtungsmaterialien sind die gleichen geeignet, wie für die Polymerfasern beschrieben. Auch hier kann die metallische Beschichtung zur deutlichen Verbesserung der Klebung beitragen.

Die metallische Oberfläche der Trägerstruktur kann in weiterer Ausgestaltung durch eine eloxierte, oder eloxierte und eingefärbte Aluminiumlegierung gebildet sein. Durch das Eloxieren wird die Oberfläche insbesondere mikroskopisch aufgeraut, so dass folgende Beschichtungen aus Farblack, insbesondere aber auch Kleber besonders gut haften.

Das Kunststofffaservlies, bzw. das fertige Flächenbauteil mit dekorativer Sichtfläche kann abschließend mit einer dünnen Lackierung, im Wesentlichen als Schutzlackierung versehen werden.

Das erfindungsgemäße Flächenbauteil eignet sich besonders als Verblendung oder Furnier. Es kann bevorzugt im Interieur von Fahrzeugen eingesetzt werden.

Aufgrund seines einfachen Aufbaus kann das Flächebauteil sowohl als Verblendung als auch als Struktur- oder Konstruktionsbauteil eingesetzt werden. Auch im Bereich von Elektro-Haushaltsgeräten oder Möbeln ist eine Verwendung sowohl als Verblendung, Furnier oder als Konstruktionsbauteil möglich.

Eine weitere Anwendungsmöglichkeit ergibt sich, wenn als Trägerstruktur eine Folie gewählt wird. Hierdurch entsteht eine Dekorfolie mit dekorativer Sichtfläche.

Die Trägerfolie ist bevorzugt eine aufklebbare oder selbstklebende Kunststofffolie mit metallisch glänzender Oberfläche.

Eine weitere Variante, ein Zierbauteil herszustellen ist das Hinterspritzen geeigneter Dekorfolien mit dekorativer Sichtfläche.

## Patentansprüche

1. Flächenbauteil mit dekorativer Sichtfläche, insbesondere als Verblendung, Furnier oder Konstruktionsbauteil im Interieur von Fahrzeugen oder von Elektrogeräten, mit einem Schichtaufbau aus Trägerstruktur aus Metall oder Kunststoff und darüber aufgeklebter Schicht aus Kunststofffaservlies, wobei das Kunststofffaservlies aus lichtreflektierenden und/oder lichtbrechenden Polymerfasern gebildet wird, die zum überwiegenden Teil metallisch beschichtet sind und
die Dichte oder Dicke des Kunststofffaservlieses so gewählt sind, dass die darunter angeordnete Trägerstruktur optisch durchscheint,
**dadurch gekennzeichnet,**
**dass** die Trägerstruktur eine metallisch glänzende oder metallisch spiegelnde Oberfläche aufweist und das Kunststofffaservlies auf der Oberfläche der Trägerstruktur raue und erhabene Strukturen ausbildet.

2. Flächenbauteil nach Anspruch 1,
**dadurch gekennzeichnet, dass**
die Fasern des Kunststofffaservlieses etwa 30 bis 80% der Oberfläche der Trägerstruktur bedecken.

3. Flächenbauteil nach einem der vorangegangenen Ansprüche,
**dadurch gekennzeichnet, dass**
die Trägerstruktur durch eine Legierung auf der Basis von Al, Ti, Fe, Cr und/oder Ni gebildet ist.

4. Flächenbauteil nach einem der Ansprüche 1 bis 3,
**dadurch gekennzeichnet, dass**
die Trägerstruktur aus Kunststoff eine metallisierte Oberfläche oder eine metallische Beschichtung aufweist.

5. Flächenbauteil nach einem der voran gegangenen Ansprüche,
**dadurch gekennzeichnet, dass**
50-80 % der Faseroberfläche des Kunststofffaservlieses metallisch beschichtet sind.

6. Flächenbauteil nach einem der Ansprüche 1 bis 4,
**dadurch gekennzeichnet, dass**
über 98% der Faseroberfläche des Kunststofffaservlieses metallisch beschichtet sind.

7. Flächenbauteil nach einem der voran gegangenen Ansprüche,
**dadurch gekennzeichnet, dass**
das Metall für die metallische Beschichtung der Kunststofffasern oder des Kunststoffs der Trägerstruktur ausgewählt ist aus Cr, Ni, Al, Au und/oder Ti.

8. Flächenbauteil nach Anspruch 7,
**dadurch gekennzeichnet, dass** die metallische Beschichtung carburiert oder/oder nitridiert ist, wobei in der Beschichtung insbesondere TiN, TiC und/oder CrN gebildet sind.

9. Flächenbauteil nach einem der voran gegangenen Ansprüche,
**dadurch gekennzeichnet, dass**
das Kunststofffaservlies unmittelbar auf die Oberfläche der Trägerstruktur mit einer dünnen und transparenten Kleberschicht aufgeklebt sind.

10. Flächenbauteil nach einem der voran gegangenen Ansprüche,
**dadurch gekennzeichnet, dass**
das Kunststofffaservlies aus einem Gewebe oder Gestrick besteht.

11. Flächenbauteil nach einem der voran gegangenen Ansprüche,
**dadurch gekennzeichnet, dass**
das Kunststofffaservlies eine dünne Klarlackschicht trägt.

12. Flächenbauteil nach einem der voran gegangenen Ansprüche,
**dadurch gekennzeichnet, dass**
die metallische Oberfläche der Trägerstruktur aus eloxierter und eingefärbter Aluminiumlegierung besteht.

## Claims

1. Planar component having a decorative visible surface, in particular for use as panelling, veneer or structural component in the interior of vehicles or electric appliances, comprising a layered construction of a support structure of metal or plastic and bonded thereupon a layer of plastic fibre fleece, the plastic fibre fleece being represented by light-reflecting and/or refractive polymer fibres which are provided with a metallic coating to a large extent, and
wherein the density or thickness of the plastic fibre fleece is chosen such that the support structure placed below shows through optically, **characterised in that**
the support structure has a metallically shiny or reflective surface, and **in that** the plastic fibre fleece forms rough and raised structures on the surface of the support structure.

2. Planar component according to claim 1,
**characterised in that**
the fibres of the plastic fibre fleece cover approximately 30% to 80% of the surface of the support structure.

3. Planar component according to any of the preceding claims,
**characterised in that**
the support structure is represented by an alloy based on Al, Ti, Fe, Cr and/or Ni.

4. Planar component according to any of claims 1 to 3,
**characterised in that**
the support structure made of a plastic material has a metallised surface or a metallic coating.

5. Planar component according to any of the preceding claims,
**characterised in that**
50% to 80% of the fibre surface of the plastic fibre fleece have a metallic coating.

6. Planar component according to any of claims 1 to 4,
**characterised in that**
more than 98% of the fibre surface of the plastic fibre fleece have a metallic coating.

7. Planar component according to any of the preceding claims,
**characterised in that**
the metal for the metallic coating of the plastic fibres or of the plastic material of the support structure is selected from Cr, Ni, Al, Au and/or Ti.

8. Planar component according to claim 7,
**characterised in that**
the metallic coating is carburetted or nitrided, with TiN, TiC and/or CrN being formed in the coating in particular.

9. Planar component according to any of the preceding claims,
**characterised in that**
the plastic fibre fleece is directly bonded to the surface of the support structure using a thin and transparent adhesive layer.

10. Planar component according to any of the preceding claims,
**characterised in that**
the plastic fibre fleece consists of a woven or knitted fabric.

11. Planar component according to any of the preceding claims,
**characterised in that**
the plastic fibre fleece supports a thin clear lacquer layer.

12. Planar component according to any of the preceding claims,
**characterised in that**
the metallic surface of the support structure consists of an anodised and dyed aluminium alloy.

## Revendications

1. Composant plat doté d'une surface visible décorative, en particulier comme revêtement, placage ou composant de construction à l'intérieur de véhicules ou d'appareils électroniques, comprenant une structure de couches fabriquée de structure de support métallique ou en matière plastique et une couche en non-tissé en matière plastique collée sur la structure de support, le non-tissé en matière plastique étant formé à partir de fibres polymères réfléchissant la lumière et/ou réfringentes, lesquelles sont en majeure partie recouvertes d'une matière métallique et la densité ou l'épaisseur du non-tissé en matière plastique est sélectionnée de telle sorte que la structure disposée en-dessous soit optiquement translucide, **caractérisé en ce que** la structure de support présente une surface réfléchissante métallique ou métallique brillante et le non-tissé en matière plastique forme sur la surface de la structure de support des structures rugueuses et élevées.

2. Composant plat selon la revendication 1, **caractérisé en ce que** les fibres du non-tissé en matière plastique recouvrent environ entre 30 et 80 % de la surface de la structure de support.

3. Composant plat selon l'une quelconque des revendications précédentes, **caractérisé en ce que** la structure de support est formée à partir d'un alliage à base de Al, Ti, Fe, Cr et/ou Ni.

4. Composant plat selon l'une quelconque des revendications 1 à 3, **caractérisé en ce que** la structure de support en matière plastique présente une surface métallisée ou un revêtement métallique.

5. Composant plat selon l'une quelconque des revendications précédentes, **caractérisée en ce qu'**entre 50 et 80 % de la surface des fibres du non-tissé en matière plastique sont pourvus d'un revêtement métallique.

6. Composant plat selon l'une quelconque des revendications 1 à 4, **caractérisé en ce que** plus de 98 % de la surface des fibres du non-tissé en matière plastique sont pourvus d'un revêtement métallique.

7. Composant plat selon l'une quelconque des revendications précédentes, **caractérisé en ce que** le métal pour le revêtement métallique des fibres en matière plastique ou de la matière plastique de la structure de support est sélectionné parmi Cr, Ni, Al, Au et/ou Ti.

8. Composant plat selon la revendication 7, **caractérisé en ce que** le revêtement métallique est carburé et/ou nitruré, le revêtement comprenant en particulier du TiN, TiC et/ou du CrN.

9. Composant plat selon l'une quelconque des revendications précédentes, **caractérisé en ce que** le non-tissé en matière plastique est collé directement sur la surface de la structure de support au moyen d'une couche de colle fine et transparente.

10. Composant plat selon l'une quelconque des revendications précédentes, **caractérisée en ce que** le non-tissé en matière plastique comprend un tissu ou un textile tricoté.

11. Composant plat selon l'une quelconque des revendications précédentes, **caractérisée en ce que** le non-tissé en matière plastique présente une couche de vernis clair.

12. Composant plat selon l'une quelconque des revendications précédentes, **caractérisé en ce que** la surface métallique de la structure de support se compose d'un alliage d'aluminium anodisé et coloré.
